# FASCICULE DE BREVET EUROPEEN

(11) **EP 1 799 424 B1**
(45) Date de publication et mention de la délivrance du brevet: **16.01.2008**
(21) Numéro de dépôt: 05809183.6
(22) Date de dépôt: 13.10.2005
(51) Int. Cl.: B29C 45/27

(54) **DISPOSITIF D'INJECTION-MOULAGE A APPUI REPARTI**
SPRITZGUSSVORRICHTUNG MIT VERTEILTER LAGERUNG
DISTRIBUTED BEARING INJECTION MOULDING DEVICE

(30) Priorité: 15.10.2004 FR 0410924
(43) Date de publication de la demande: 27.06.2007
(73) Titulaire: DELACHAUX S.A., 92230 Gennevilliers (FR)
(72) Inventeur: RAMOND, Louis, F-58270 Beaumont-Sardolle (FR)
(74) Mandataire: Texier, Christian
(86) Numéro de dépôt international: PCT/FR2005/002536
(87) Numéro de publication internationale: WO 2006/042941

(56) Documents cités:
- DE-C1- 3 338 783
- US-A- 4 017 242
- PATENT ABSTRACTS OF JAPAN vol. 017, no. 607 (M-1507), 9 novembre 1993 (1993-11-09) -& JP 05 185471 A (MATSUSHITA ELECTRIC IND CO LTD), 27 juillet 1993 (1993-07-27) cité dans la demande
- DATABASE WPI Section Ch, Week 200014 Derwent Publications Ltd., London, GB; Class A32, AN 2000-155500 XP002326205 & JP 2000 015665 A (MATSUSHITA DENKI SANGYO KK) 18 janvier 2000 (2000-01-18)
- PATENT ABSTRACTS OF JAPAN vol. 007, no. 165 (M-230), 20 juillet 1983 (1983-07-20) -& JP 58 072430 A (SONY KK), 30 avril 1983 (1983-04-30)

## Description

La présente invention concerne un dispositif d'injection d'une matière thermoplastique à l'état liquide dans une empreinte de moulage, comportant, en référence à un sens déterminé d'injection:
- une matrice rigide, présentant une face avant délimitant partiellement l'empreinte de moulage, une face arrière sensiblement plane et sensiblement perpendiculaire au sens d'injection, et au moins un exemplaire d'un passage traversant la matrice de sa face arrière à sa face avant, dans le sens d'injection,
- autant d'exemplaires d'une buse d'injection que d'exemplaires du passage traversant, chaque exemplaire de la buse d'injection étant disposé à l'intérieur d'un exemplaire respectif du passage traversant et en appui vers l'avant sur la face arrière de la matrice, en formant une saillie vers l'arrière sur la face arrière de la matrice,
- un distributeur plat, rigide, présentant une face avant sensiblement plane, sensiblement parallèle à la face arrière de la matrice et en appui vers l'avant sur chaque exemplaire de la buse d'injection et, le cas échéant, sur la face arrière de la matrice par l'intermédiaire de moyens localisés de positionnement relatif, de façon à définir autour de chaque exemplaire de la buse d'injection et, le cas échéant, des moyens localisés de positionnement relatif, entre la face avant du distributeur et la face arrière de la matrice, un espace avant sensiblement continu, plat, le distributeur présentant en outre une face arrière sensiblement plane, sensiblement parallèle à sa face avant, et un chant périphérique raccordant mutuellement ses faces avant et arrière,
- un conduit d'alimentation du distributeur en matière thermoplastique à l'état liquide, formant une saillie vers l'arrière sur la face arrière du distributeur, et, le cas échéant, des moyens commandés d'obturation de chaque exemplaire de la buse d'injection, formant une saillie vers l'arrière sur la face arrière du distributeur,
- un sommier plat, rigide, présentant une face avant sensiblement plane, sensiblement parallèle à la face arrière du distributeur et en appui vers l'avant sur la face arrière du distributeur par l'intermédiaire de moyens d'entretoisement de façon à définir autour du conduit d'alimentation et, le cas échéant, des moyens d'obturation, entre la face avant du sommier et la face arrière du distributeur, un espace arrière sensiblement continu, plat, le sommier et les moyens d'entretoisement étant agencés pour autoriser un libre passage, vers l'arrière, du conduit d'alimentation et, le cas échéant, des moyens d'obturation,
- des moyens rigides d'appui périphérique, vers l'avant, d'une zone périphérique de la face avant du sommier sur une zone périphérique de la face arrière de la matrice, autour du chant périphérique du distributeur, définissant avec le chant périphérique du distributeur un espace périphérique continu, communiquant avec les espaces avant et arrière, et
- des tirants d'assemblage mutuel de la matrice et du sommier par l'intermédiaire desdits moyens d'appui périphérique, sensiblement parallèles au sens d'injection et répartis autour dudit espace périphérique.

Un tel dispositif d'injection est bien connu en lui-même, dans divers modes de réalisation dans lesquels, de façon commune, on cherche à limiter les ponts thermiques entre le distributeur d'une part, la matrice et le sommier, d'autre part, en limitant à chaque exemplaire de la buse d'injection et, le cas échéant, aux moyens localisés de positionnement relatif l'appui de la face avant du distributeur sur la face arrière de la matrice, et en limitant au prolongement de chaque exemplaire de la buse d'injection, en sens opposé au sens d'injection, les moyens d'entretoisement, ainsi étroitement localisés, entre la face arrière du distributeur et la face avant du sommier.

Or, la matière thermoplastique à l'état liquide injectée sous pression dans l'empreinte de moulage applique à la face avant de la matrice des efforts considérables, qui, ainsi, s'exercent pour l'essentiel en porte à faux par rapport aux appuis de la matrice sur le distributeur, en particulier par l'intermédiaire des buses, ce qui se traduit par une tendance de la matrice à fléchir entre ces appuis.

Un fléchissement de la matrice se traduirait par une déformation de la face avant de celle-ci, c'est-à-dire d'une part, par un défaut de géométrie de l'empreinte de moulage et, par conséquent, par un défaut de géométrie des pièces obtenues par moulage, et d'autre part, par un défaut d'application de cette face avant sur une face similaire d'une contre-matrice, autour des empreintes, et, par conséquent, par des fuites de matière thermoplastique autour des empreintes et par des bavures autour des pièces obtenues.

Transmis au sommier par l'intermédiaire du distributeur, un tel fléchissement de la matrice pourrait également se traduire par un fluage progressif du sommier, se traduisant lui-même par une perte d'étanchéité entre le distributeur et les buses chaque fois que, comme il est fréquent, cette étanchéité est assurée par simple appui longitudinal mutuel.

On cherche par conséquent à pallier cette tendance au fléchissement:
- d'une part, en donnant à la matrice une épaisseur propre à lui conférer la rigidité requise,
- d'autre part, lorsque plusieurs exemplaires de buse d'injection sont prévus, en écartant mutuellement ces différents exemplaires de façon suffisante pour affecter le moins possible cette rigidité de la matrice.

On obtient certes une rigidité suffisante de cette matrice, et l'on peut assurer la qualité géométrique des pièces obtenues, limiter le besoin d'ébarbage de celles-ci et réduire les pertes de matière thermoplastique, mais au prix
- d'une épaisseur importante et, par conséquent, d'une part d'un poids important de la matrice et du dispositif d'injection dans son ensemble, c'est-à-dire également d'un surdimensionnement des moyens d'ouverture et de fermeture des moules, d'autre part d'une grande longueur des buses, c'est-à-dire également d'une certaine difficulté à maintenir une température sensiblement uniforme de la matière thermoplastique à l'état liquide qui transite par elles, et
- d'une dispersion des différents exemplaires de la buse d'injection, ce qui a des conséquences aussi bien quand on utilise plusieurs exemplaires d'une buse d'injection pour mouler une seule pièce de grande taille que lorsque l'on utilise plusieurs exemplaires d'une buse d'injection pour réaliser une pièce respective de petite taille, dans le premier cas en n'autorisant pas le moulage de certaines formes complexes, qui nécessiteraient au moins localement une densité plus importante de buses d'injection, et, dans le deuxième cas, en limitant le nombre de buses, c'est-à-dire d'empreintes et par conséquent de pièces moulées en une seule fois, pour des dimensions données de la face avant de la matrice.

Pour tenter de remédier à ces inconvénients, la demande de brevet japonais JP-A-05 18 5471 propose un dispositif d'injection du type indiqué en préambule, comportant en outre une plaque avant d'un matériau thermiquement isolant, en appui à plat, de façon aussi continue que possible, contre une surface aussi grande que possible de la face arrière de la matrice et de la face avant du distributeur, autour de chaque exemplaire de la buse d'injection, pour combler au maximum ledit espace avant, et, à titre de moyens d'entretoisement entre le distributeur et le sommier, une plaque arrière d'un matériau thermiquement isolant, en appui à plat, de façon aussi continue que possible, contre une surface aussi grande que possible de la face arrière du distributeur et de la face avant du sommier, autour de moyens d'obturation, pour combler au maximum ledit espace arrière, de telle sorte que les efforts que la matière thermoplastique injectée dans l'empreinte de moulage exerce sur la face avant de la matrice se répartissent de façon aussi uniforme que possible, par la face arrière de celle-ci, sur la face avant du distributeur et que ce dernier les transmette lui-même au sommier de façon répartie aussi uniformément que possible par sa face arrière.

Cependant, dans le dispositif décrit dans la demande de brevet japonais précitée, les moyens d'appui périphérique conservent une conception traditionnelle, c'est-à-dire comportent un ensemble rigide de calage présentant une face avant reposant à plat contre la zone périphérique de la face arrière de la matrice et une face arrière reposant à plat contre la face avant du sommier.

Or, même si l'on choisit un matériau isolant aussi incompressible que possible pour les plaques avant et arrière, le matériau généralement métallique utilisé pour réaliser l'ensemble rigide de calage est encore moins compressible et, dans la mesure où la transmission des efforts en question de la matrice vers le distributeur puis du distributeur vers le sommier, par l'intermédiaire des plaques avant et arrière, s'exerce en porte à faux par rapport à l'appui que cet ensemble rigide de calage offre à la matrice et à l'appui que le sommier offre à cet ensemble rigide, ces efforts tendent encore à se traduire par un fléchissement de la matrice et, éventuellement, du distributeur, avec tous les inconvénients précités qui peuvent en découler.

Le but de la présente invention est de remédier plus efficacement à ces inconvénients et, à cet effet, la présente invention propose un dispositif d'injection - moulage du type indiqué en préambule, comportant comme le suggère la demande de brevet japonais précitée une plaque avant d'un matériau thermiquement isolant, en appui à plat, de façon aussi continue que possible, contre une surface aussi grande que possible de la face arrière de la matrice et de la face avant du distributeur, autour de chaque exemplaire de la buse d'injection et, le cas échéant, des moyens localisés de positionnement relatif, pour combler au maximum ledit espace avant, ladite plaque avant étant sensiblement incompressible parallèlement au sens d'injection dans des conditions normales d'injection, ce dispositif étant caractérisé en ce que lesdits moyens d'appui périphérique comportent un ensemble rigide de calage présentant une face avant coplanaire de la face avant du distributeur et une partie périphérique de la plaque avant, en appui à plat, de façon aussi continue que possible, autour des tirants, vers l'avant contre une surface aussi grande que possible de la zone périphérique de la face arrière de la matrice et vers l'arrière contre la face avant de l'ensemble de calage.

On uniformise ainsi le mode d'appui de la face arrière de la matrice contre le distributeur, d'une part, et contre l'ensemble rigide de calage, d'autre part, ce qui fait pratiquement disparaître toute transmission d'efforts en porte-à-faux entre eux en conséquence des efforts appliqués à la face avant de la matrice par la matière thermoplastique injectée et toute tendance de la matrice au fléchissement.

Dans ces conditions, alors que le sommier reste en tout état de cause dimensionné pour résister à l'ensemble des efforts ainsi appliqués par la matière thermoplastique à la face avant de la matrice, il est possible de réduire sensiblement l'épaisseur de celle-ci entre ses faces avant et arrière et, si on le souhaite, de rapprocher les uns des autres les différents exemplaires de la buse d'injection.

Ainsi, d'une part, il est possible d'alléger considérablement le dispositif d'injection, d'avoir recours à des moyens d'ouverture et de fermeture des moules moins puissants, de raccourcir les buses, de simplifier les moyens associés de chauffage et de régulation thermique et, par conséquent, de réduire le coût des installations de moulage, et, d'autre part, il est possible soit de mouler des pièces de grande dimension au moyen de plusieurs exemplaires d'une buse d'injection en disposant si nécessaire ces derniers beaucoup plus près les uns des autres pour répondre au besoin d'une géométrie particulière de ces pièces, c'est-à-dire de réaliser par injection-moulage des pièces dont la géométrie paraissait jusqu'à présent difficilement envisageable pour une réalisation par ce procédé, soit de fabriquer simultanément un plus grand nombre de pièces de petite taille mettant en oeuvre un seul exemplaire respectif de buse d'injection en rapprochant mutuellement les différents exemplaires de buse et en prévoyant par conséquent un nombre supérieur de des exemplaires et des empreintes correspondantes, à dimensions identiques de la face avant de la matrice.

Néanmoins, le choix d'un matériau thermiquement isolant pour la plaque avant et pour la plaque arrière éventuelle permet de limiter de façon satisfaisante les échanges thermiques entre le distributeur, d'une part, la matrice et le sommier, d'autre part.

On pourrait par ailleurs conserver la conception traditionnelle des moyens d'entretoisement entre le distributeur et le sommier, c'est-à-dire une disposition localisée de moyens d'entretoisement entre eux ; dans ce cas, cependant, seuls la plaque avant et le distributeur contribueraient à rigidifier la matrice à l'encontre d'un fléchissement.

On préfère par conséquent un mode de réalisation du dispositif selon l'invention dans lequel, de façon connue en elle-même et comme dans le dispositif décrit dans la demande de brevet japonais précitée, les moyens d'entretoisement entre la face arrière du distributeur et la face avant du sommier sont constitués par une plaque arrière d'un matériau thermiquement isolant, en appui à plat, de façon aussi continue que possible, contre une surface aussi grande que possible de la face arrière du distributeur et de la face avant du sommier, autour du conduit d'alimentation et, le cas échéant, des moyens d'obturation, pour combler au maximum ledit espace arrière, et cette plaque arrière est sensiblement incompressible parallèlement au sens d'injection dans des conditions normales d'injection, et dans lequel on uniformise également l'appui du distributeur et de l'ensemble rigide de calage contre la face avant du sommier, de telle sorte que la plaque arrière et le sommier contribuent également à rigidifier la matrice à l'encontre d'un fléchissement, d'une façon dont on comprendra aisément qu'elle est favorable.

A cet effet, selon un mode de réalisation préféré du dispositif selon l'invention, lesdits moyens d'appui périphérique comportent un ensemble rigide de calage présentant une face arrière coplanaire de la face arrière du distributeur et une partie périphérique de la plaque arrière, en appui à plat, de façon aussi continue que possible, autour des tirants, vers l'arrière contre une surface aussi grande que possible de la zone périphérique de la face avant du sommier et vers l'avant contre la face arrière de l'ensemble de calage.

Le dispositif selon l'invention se présente alors comme une superposition de couches constituées respectivement par la matrice, la plaque avant, le distributeur et l'ensemble de calage, autour de celui-ci, la plaque arrière et le sommier, dont chacune peut présenter des caractéristiques homogènes en particulier en termes de compressibilité, ou plus précisément d'incompressibilité parallèlement au sens d'injection, référence étant faite aux conditions normales d'injection, et qui travaillent donc dans des conditions respectives uniformes, de façon tout à fait favorable à une réduction, voire une suppression, des risques de déformation. Cette superposition de couches, liées entre elles par les tirants, est pratiquement exempte de lacunes, ce qui leur permet de coopérer aux fins de présenter une rigidité suffisante pour une épaisseur globale réduite par rapport à celle des dispositifs d'injection de conception traditionnelle, cette épaisseur se mesurant parallèlement au sens d'injection.

Dans le dispositif multicouche ainsi constitué, la matrice est isolée thermiquement du distributeur, lui-même isolé thermiquement du sommier et, dans la mesure où les plaques avant et arrière s'étendent entre l'ensemble de calage et, respectivement, la matrice ou le sommier, cette isolation thermique du distributeur vis-à-vis de la matrice et du sommier concerne également l'ensemble de calage.

On peut en outre isoler thermiquement le distributeur de l'ensemble de calage si, comme il est préféré, le dispositif selon l'invention comporte en outre une enveloppe périphérique en matériau thermiquement isolant, comblant ledit espace périphérique continu, placée en relation de continuité avec les plaques avant et arrière, et présentant parallèlement au sens d'injection une rigidité au plus égale à celle du distributeur et des moyens d'appui.

On crée alors une isolation thermique continue entre le distributeur, que l'on veille à maintenir à une température suffisamment élevée pour que la matière thermoplastique y reste à l'état liquide et que l'on munit généralement à cet effet de moyens de chauffage, et une enveloppe comparativement froide constituée autour du distributeur par la matrice, le sommier et l'ensemble rigide de calage, généralement munis quant à eux de moyens de refroidissement.

La continuité de l'enveloppe périphérique avec les plaques avant et arrière peut résulter d'un simple appui de l'enveloppe périphérique vers l'avant sur la plaque avant et vers l'arrière sur la plaque arrière et le choix pour l'enveloppe périphérique d'une rigidité plus ou moins égale à celle du distributeur et des moyens d'appui permet de ne pas perturber l'effet de répartition des efforts procuré conformément à la présente invention.

D'autres caractéristiques des avantages d'un dispositif selon l'invention ressortiront de la description ci-dessous, relative à un exemple non limitatif de réalisation, ainsi que des dessins annexés, qui accompagnent cette description.

La figure 1 montre un dispositif d'injection de l'art antérieur, en coupe par un plan parallèle au sens d'injection.

La figure 2 montre une vue similaire d'un dispositif d'injection conforme à la présente invention.

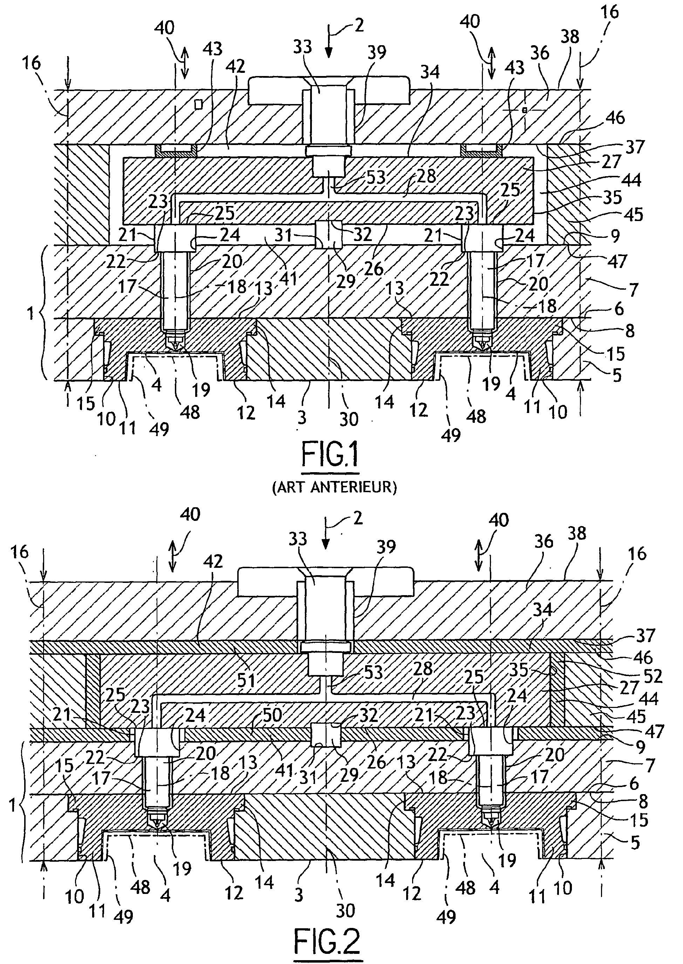

Compte tenu de ce que l'on retrouve dans le dispositif selon l'invention, tel qu'il est illustré à la figure 2, les mêmes composants que dans un dispositif d'injection traditionnel, tel qu'il est illustré à la figure 1, on reprendra les mêmes références numériques pour décrire ces composants.

Dans son mode de réalisation selon l'invention comme dans son mode de réalisation selon l'art antérieur, le dispositif illustré à titre d'exemple non limitatif est destiné à fabriquer simultanément, par injection-moulage, plusieurs produits identiques, à savoir ici deux produits identiques tels que des bouchons pour des bouteilles d'eau, de produit détergent ménager ou produit similaire ; il est bien entendu, toutefois, que la présente invention pourrait également trouver son application au moulage d'une seule pièce de dimension plus importante que celle d'un bouchon, ou toute autre pièce, en mettant en oeuvre une buse d'injection unique ou plusieurs buses d'injection.

Dans ses deux versions illustrées respectivement aux figures 1 et 2, le dispositif d'injection comporte ainsi une matrice rigide 1, qui, en référence à un sens d'injection 2 déterminé, qui servira de référence aux notions d'avant et d'arrière pour l'ensemble de la présente description, présente une face avant 3 par exemple plane, ici creusée de deux empreintes 4 de moulage, par exemple mutuellement identiques, ou plus généralement d'autant d'exemplaires d'une empreinte de moulage que l'on souhaite mouler simultanément de produits.

Comme il est bien connu d'un Homme du métier, la matrice 1 est formée d'un empilage, plat, parallèlement au sens 2 d'une pluralité de plaques, plates, à savoir dans l'exemple illustré une plaque avant 5 présentant deux faces principales planes, mutuellement parallèles et perpendiculaires au sens 2, à raison de la face avant 3 de la matrice 1 et d'une face arrière 6, et d'une plaque arrière 7 présentant également deux faces principales planes, mutuellement parallèles et perpendiculaires au sens 2, à raison d'une face avant 8 qui s'applique à plat, de façon aussi continue que possible, contre la face arrière 6 de la plaque avant 5 et d'une face arrière 9 qui constitue une face arrière pour la matrice 1 considérée dans son ensemble.

Les deux plaques 5 et 7, présentent par ailleurs un chant périphérique extérieur, non illustré, qui définit un chant périphérique extérieur pour la matrice 1.

A l'emplacement de chaque empreinte 4, la plaque 5 est percée parallèlement au sens 2, de part en part, c'est-à-dire de sa face arrière 6 à sa face avant 3, d'un logement respectif 10 pour une pièce rapportée 11 respective constituant l'empreinte 4 proprement dite, chaque pièce 11 présentant vers l'avant, autour de l'empreinte 4 respective, une face plane 12 coplanaire de la face avant 3 de la matrice 1, ou de la plaque 5, et vers l'arrière une face arrière 13 coplanaire de la face arrière 6 de la plaque avant 5, de façon à s'appuyer comme cette dernière, vers l'arrière, sur la face avant 8 de la plaque 7. L'emboîtement d'une nervure périphérique 14 que chaque pièce 11 présente à proximité immédiate de cette face arrière 13, dans une gorge périphérique 15 aménagée complémentairement dans chaque logement 10, à proximité immédiate de la face arrière 6 de la plaque 5, permet d'immobiliser chaque pièce 11 par rapport aux plaques 5, 7 par pincement entre ces dernières parallèlement au sens 2, en raison d'un assemblage mutuel des plaques 5, 7 par l'intermédiaire de tirants 16, parallèles au sens 2, qui seront écrits par la suite.

Un tel montage est bien connu d'un Homme du métier et il ne nécessite par conséquent pas davantage de description.

De même, d'une façon bien connue d'un Homme du métier, qui ne sera pas décrite dans le détail, à chaque empreinte 4 est associée une buse respective 17 d'injection de matière thermoplastique à l'état liquide, étant bien étendu que plusieurs exemplaires d'une buse 17 pourraient être associés à une même empreinte 4, en particulier dans le cas d'une empreinte 4 unique.

La buse 17 est disposée suivant un axe respectif 18 qui est orienté parallèlement au sens 2 et, dans l'exemple illustré, constitue avantageusement un axe de symétrie pour l'empreinte 4 correspondante ainsi que pour la pièce 11 correspondante dans son ensemble.

Chaque buse 17 est équipée de moyens de chauffage et de régulation de température, non illustrés, dans des conditions bien connues d'un Homme du métier, afin de maintenir la matière thermoplastique en cours d'injection à l'état liquide.

Pour recevoir la buse 17 correspondante, chaque pièce 11 et, coaxialement à chaque pièce 11 respectivement, la plaque 7 sont percées d'un passage respectif 19, 20 qui les traverse de part en part suivant l'axe 18, c'est-à-dire respectivement de la face arrière 13 vers l'empreinte 4 et de la face arrière 9 vers la face avant 8, dans le sens 2.

Dans une zone extrême arrière, chaque buse 17 présente un élargissement 21, en direction radiale par rapport à l'axe 18 respectif, cet élargissement 21 définissant vers l'avant, un épaulement annulaire 22, perpendiculaire à l'axe 18 respectif et tourné vers l'avant. Par cet épaulement 22, situé à un niveau intermédiaire entre les faces 9 et 8 de la plaque 7, chaque buse 17 prend appui vers l'avant sur un épaulement annulaire 23 aménagé complémentairement, en creux, dans la face arrière 9 de la plaque 7, lequel épaulement 23 est tourné vers l'arrière et constitue le fond d'une zone 24 élargie, perpendiculairement à l'accès 18 respectif, que chaque passage 20 présente à proximité immédiate de son raccordement à la face arrière 9 de la plaque arrière 7. L'appui de l'épaulement 22, vers l'avant, sur l'épaulement 23 correspondant fixe chaque buse, parallèlement au sens 2, par rapport à la plaque 7, à la plaque 5, à l'empreinte 4 correspondante, et une coopération entre l'élargissement 21 de chaque buse 17 et la zone élargie 24 du passage 20 correspondant, perpendiculairement à l'axe 18 correspondant, fixe localement la buse 20 en position perpendiculairement à cet axe 18, par rapport aux plaques 7 et 5 ainsi que par rapport à l'empreinte 4 correspondantes ; de façon non représentée, des moyens peuvent également être prévus dans chaque pièce 11 pour y assurer la coaxialité de la buse 17 respective.

De façon également connue, chaque buse 17 forme une saillie, vers l'arrière, par rapport à la face 9 de la plaque 7, à savoir par son élargissement 21 qui est délimité vers l'arrière par une face arrière, plane 25 qui est orientée perpendiculairement à l'axe 18 correspondant et se situe, pour toutes les buses 17, à une même distance de la face arrière 9 de la plaque 7, en arrière de celle-ci, parallèlement au sens 2. En d'autres termes, les faces arrière 25 des différentes buses 17 sont mutuellement coplanaires et parallèles à la face arrière 9 de la plaque arrière 7.

De façon bien connue en elle-même, des rondelles formant ressort peuvent être intercalées entre les épaulements 22 et 23 pour tendre à repousser élastiquement chaque buse 17 vers l'arrière par rapport à la plaque 7, en particulier lorsqu'on utilise un simple appui de chaque face 25, vers l'arrière, contre une face avant 26 plane, perpendiculaire au sens 2, d'un distributeur 27 disposé en arrière de la plaque 7 pour assurer une étanchéité à l'encontre d'un passage de matière thermoplastique à l'état liquide, entre chaque buse 17 et ce distributeur 27.

Il est bien entendu, cependant, que la présente invention est compatible avec d'autres modes de coopération entre les buses 17 et le distributeur 27, et par exemple avec le montage solidaire mais amovible de chaque buse 17 sur le distributeur 27, par exemple par vissage.

La face avant 26 du distributeur 27 est ainsi placée parallèlement à la face arrière 9 de la plaque 7, en arrière de celle-ci, et couvre coplanairement les faces arrière 25 de toutes les buses 17.

A l'intérieur du distributeur 27 est aménagé un réseau de canaux 28 de distribution de la matière thermoplastique à l'état liquide entre les différentes buses 17, et des moyens sont prévus pour faire en sorte que chacun des canaux 28 débouche vers l'avant, et vers la buse 17 respectivement correspondante, au moins approximativement selon l'axe 18 de celle-ci. A titre d'exemple non limitatif de tels moyens de positionnement relatif, on a illustré aux figures 1 et 2 un pion 29 disposé suivant un axe 30 parallèle aux axes 18 et disposé entre ces derniers, à une même distance de chacun d'eux, lequel pion 29 s'engage complémentairement, respectivement vers l'avant et vers l'arrière, dans une cavité borgne 31 aménagée complémentairement dans la face arrière 9 de la plaque 7, suivant l'axe 30, et dans une cavité borgne 32 aménagée complémentairement dans la face avant 26 du distributeur 27, suivant l'axe 30. Selon les cas, plus d'un pion 29, coopérant ainsi avec une cavité respective 31 de plaque 7 et une cavité respective 32 du distributeur 27, peut être ainsi prévu d'une façon bien connue à l'Homme du métier.

Suivant l'axe 30, le réseau de canaux 28 du distributeur 27 est raccordé, par un canal 53 de celui-ci, à un conduit 33 d'alimentation du distributeur 27 en matière thermoplastique à l'état liquide, lequel conduit 33 est également disposé suivant l'axe 30 et forme une saillie, vers l'arrière, par rapport à une face arrière 34 du distributeur 27, plane et parallèle à la face 26.

Le mode de coopération entre le conduit 33 et le distributeur 27 est bien connu en lui-même d'un Homme du métier, et ne sera pas détaillé. De même, ce conduit 33, comme le distributeur 27, est muni de moyens régulés de chauffage qui sont bien connus d'un Homme du métier et n'ont pas été illustrés.

Perpendiculairement au sens 2, les faces avant 26 et arrière 34 du distributeur 27 présentent des dimensions inférieures à celles de la face arrière 9 de la plaque 7 et sont raccordées mutuellement, entre les tirants 16, par un chant périphérique 35 qui, ainsi, est placé en retrait vers l'axe 30 et les axes 18 par rapport aux tirants 16.

En arrière du distributeur 27 est disposé un sommier 36 plat, perpendiculaire au sens 2 et présentant vers la face arrière 34 du distributeur 27 une face avant 37 qui est plane et parallèle à la face 34 mais présente perpendiculairement au sens 2 des dimensions supérieures à celles de cette face 34, à savoir sensiblement identiques à celles de la face arrière 9 de la plaque 7 ou encore de la face avant 3 de la plaque 5.

Vers l'arrière, le sommier 36 est délimité par une face arrière 38 qui, dans l'exemple illustré, est également plane et perpendiculaire au sens 2 et qui présente perpendiculairement à celui-ci des dimensions sensiblement identiques à celles de la face 37.

Suivant l'axe 30, c'est-à-dire coaxialement au conduit 33 d'alimentation, le sommier 36 est percé de part en part, c'est-à-dire de sa face arrière 38 à sa face avant 37, d'un passage 39 autorisant sa libre traversée par le conduit 33. De même, lorsque les buses 17 sont d'un type à obturation commandée, il est percé de part en part, suivant chaque axe 18, d'un canal non représenté autorisant également un libre passage, parallèlement au sens 2, pour des moyens d'obturation de la buse 18 respectivement correspondante, schématisés dans l'exemple illustré sous forme d'un prolongement de chaque axe 18 jusqu'en arrière de la face arrière 38 du sommier 36 ; celui-ci porte alors avantageusement, sur cette face 38, des moyens commandés pour provoquer le passage des moyens d'obturation de l'une à l'autre d'une position d'obturation de la buse 17 correspondante et d'une position d'ouverture de cette buse 17, comme on l'a schématisé par une double flèche 40 parallèle au sens 2 ; un tel montage est bien connu en lui-même d'un Homme du métier, et ne sera pas davantage décrit. Il est bien entendu que les buses 17 peuvent également être démunies d'obturateur, d'une façon tout autant compatible avec la mise en oeuvre de la présente invention.

De même que la face avant 26 du distributeur 27 est espacée de la face arrière 29 de la plaque 7, en laissant subsister vis-à-vis d'elle un espace plat 41, perpendiculaire au sens 2 et continu si l'on excepte sa traversée par la zone élargie 21 des buses 17 et par le pion de positionnement 29, la face avant 37 du sommier 36 est espacée de la face arrière 34 du distributeur 27, vers l'arrière, et laisse subsister vis-à-vis de cette face 34 un espace plat 42 perpendiculaire au sens 2 et continu si l'on excepte sa traversée par le conduit d'alimentation 33 et, le cas échéant, par les moyens d'obturation des différentes buses 17.

Dans l'art antérieur tel qu'il est illustré à la figure 1, l'espace 42 est préservé par interposition entre les faces 37 et 34, suivant chaque axe 18, d'une entretoise rigide respective 43 étroitement localisée, perpendiculairement au sens 2, afin de réduire les ponts thermiques entre la face arrière 34 du distributeur 27 et la face avant 37 du sommier 36. L'espace 42, autour du conduit d'alimentation 33, des éventuels moyens d'obturation des buses 17 et des entretoises 43, définit une lame d'air, et il en est de même de l'espace 41 entre les élargissements 21 des buses 17 et le pion de centrage 29 et autour d'eux.

De même, tout autour du chant périphérique 35 du distributeur 27 est aménagé un espace périphérique continu 44 qui communique avec les espaces 41 et 42 et définit comme eux, dans l'art antérieur, une lame d'air qui contribue à l'isolation thermique du distributeur 27.

Autour de celui-ci, dans le sens d'un éloignement par rapport à l'axe 30, l'espace 44 est défini par des moyens périphériques d'appui d'une zone périphérique de la face avant 37 du sommier 36 vers l'avant sur une zone périphérique de la face arrière 9 de la matrice 1, sous l'effet des tirants 16 qui agissent sur le sommier 38 et sur la matrice 1 dans le sens d'un rapprochement mutuel à travers ces moyens périphériques d'appui et peuvent présenter diverses formes et conceptions, à savoir par exemple la forme de boulons d'assemblage, parallèlement au sens 2, du sommier 38 aux moyens périphériques d'appui, de la plaque 7 à ces moyens et de la plaque 5 à la plaque 7, cet exemple n'étant bien entendu en aucune façon limitatif.

Dans l'art antérieur, comme le montre la figure 1, les moyens périphériques d'appui sont constitués par un ensemble rigide de calage 45 constitué de pièces massives dont chacune présente une face arrière plane 46, perpendiculaire au sens 2, sur laquelle la face avant 37 du sommier 36 s'appuie à plat dans ce sens 2, et une face avant 47 également plane et perpendiculaire au sens 2, cette face 47 étant en appui à plat dans ce sens 2 sur la face arrière 9 de la plaque 7.

Avec le sommier 36 et la matrice 1, l'ensemble rigide de calage 45 constitue autour du distributeur 27 une enveloppe comparativement froide, en relation d'échange thermique avec l'air ambiant et le plus souvent munie de moyens de refroidissement non représentés, par exemple réalisés sous la forme de canaux de circulation d'un liquide de refroidissement.

Dans ces conditions, lors de l'injection, c'est-à-dire lorsque l'on injecte de la matière thermoplastique à l'état liquide dans les différents exemplaires d'une cavité fermée 48, délimitée dans chaque empreinte 4 par une contre-empreinte respective 49 d'une contre-matrice non illustrée, la pression appliquée par la matière thermoplastique à chaque empreinte 4, c'est-à-dire à chaque pièce 11, se traduit par l'application, à la plaque 7, d'efforts pour l'essentiel en porte à faux par rapport aux appuis comparativement limités des buses 17, vers l'arrière, contre la face avant 26 du distributeur, ainsi que par rapport aux appuis respectifs du pion 29 contre le distributeur 27 et de la face arrière 9 de la plaque 7 contre la face avant 47 de l'ensemble de calage 45.

Il en résulte une tendance de la plaque 7 à fléchir vers l'arrière entre les appuis ainsi constitués, et c'est en donnant à la plaque 7 une épaisseur conséquente, entre ses faces avant 8 et arrière 9, nécessitant une longueur appropriée des buses 17 parallèlement au sens 2, que l'on communique à cette plaque 7 une résistance mécanique suffisante à l'encontre d'un tel fléchissement.

Dans le cas d'un dispositif conforme à la présente invention, tel qu'il est illustré à la figure 2, par contre, l'espace 41 est intégralement comblé, autour des élargissements 21 des buses 17 et du pion 29, par une plaque avant 50 de matériau thermiquement isolant qui s'appuie à plat, de façon aussi continue que possible, sur une surface aussi grande que possible de la face arrière 9 de la plaque 7, vers l'avant, et sur une surface aussi grande que possible de la face avant 26 du distributeur 27, vers l'arrière ; de plus, dans un tel dispositif, une partie périphérique de cette plaque 50, s'étend entre la face avant 47 de l'ensemble rigide de calage 45, alors coplanaire de la face avant 26 du distributeur 27, et la zone périphérique correspondante de la face arrière 9 de la plaque 7, jusqu'à la périphérie extérieure de celle-ci, et elle également soumise à l'effet de serrage procuré par les tirants 16.

Le matériau constitutif de la plaque 50 est choisi de façon à être sensiblement incompressible parallèlement au sens 2 dans des conditions normales d'injection, si bien que la plaque 50 assure au même titre que les élargissements 21 des buses 17 et que le pion 29 une transmission d'efforts, en sens opposé au sens 2, de la face arrière 9 de la plaque 7 à la face avant 26 du distributeur 27 de même que, dans la mesure où la plaque 50 se prolonge entre une zone périphérique de la face arrière 9 de la plaque 7 et la face avant 47 de l'ensemble rigide de calage 45, elle assure une transmission des efforts de la plaque 7 à cet ensemble 45 en sens opposé au sens 2.

Ainsi, comme le comprendra aisément un Homme du métier, on obtient une répartition sur la totalité de la face avant 26 du distributeur 27 et sur la face avant 47 de l'ensemble 45, des efforts qui tendraient à faire fléchir la plaque 7, si bien que le distributeur 27 et l'ensemble 45 contribuent à la rigidification de celle-ci.

On peut donc réduire l'épaisseur de la plaque 7 ainsi que la longueur des buses 17, en comparaison avec l'art antérieur, sans pour autant craindre un fléchissement de la plaque 7 sous l'effet des efforts qui lui sont appliqués par la matière thermoplastique à l'état liquide, injectée dans les cavités 48.On peut également rapprocher mutuellement les passages 20 aménagés dans la plaque 7 en vue de la réception des buses 17, c'est-à-dire ces buses 17 ainsi que les empreintes 4 correspondantes, ce qui permet d'augmenter le nombre d'empreintes 4, à dimensions identiques du dispositif d'injection perpendiculairement au sens 2.

Naturellement, le distributeur 27 pourrait alors avoir tendance à fléchir entre les entretoises 43 si celles-ci étaient conservées, puisqu' il serait ainsi sollicité vers l'arrière, en porte à faux par rapport à ces entretoises 43.

Par conséquent, dans le dispositif selon l'invention, on préfère remplacer les entretoises localisées 43, dans l'espace 42 par une plaque 51 en tous points similaire à la plaque 50, c'est-à-dire réalisée en un matériau thermiquement isolant, sensiblement incompressible parallèlement au sens 2 dans des conditions normales d'injection, et l'on dimensionne cette plaque 51 de telle sorte qu'elle soit en appui à plat, de façon aussi continue que possible, sur une surface aussi grande que possible de la face arrière 34 du distributeur 35 et de la face avant 37 du sommier 36, autour des conduits d'alimentation 39 et des éventuels moyens d'obturation des buses 17, jusqu'entre la face arrière 46 de l'ensemble rigide de calage 45, alors coplanaire de la face arrière 34 du distributeur 27, et une zone périphérique de la face avant 37 du sommier 36, par une partie périphérique de la plaque 51 alors également concernée par le serrage appliqué par les tirants 16.

C'est alors un ensemble compact, constitué par une superposition de la plaque 7, de la plaque 50, du distributeur 27 et de l'ensemble rigide de calage 45, de la plaque 51, et du sommier 38 qui coopère pour résister à l'encontre d'un fléchissement sous l'effet des efforts appliqués aux empreintes 4, à l'intérieur des cavités 48, par la matière thermoplastique injectée dans ces dernières, et l'obtention d'une rigidité suffisante au niveau de la plaque 5 et des pièces 11 y définissant les empreintes 4 peut s'obtenir au prix d'une épaisseur totale bien moindre de l'ensemble ainsi constitué entre la face avant 3 de la plaque 5 et la face arrière 38 du sommier 36.

Le choix d'un matériau approprié pour les plaques 50 et 51 permet d'obtenir en outre une isolation thermique au moins aussi bonne que dans l'art antérieur autour du distributeur 27, et on peut améliorer cette isolation thermique en comblant l'espace 44 au moyen d'une enveloppe périphérique 52 d'un matériau thermiquement isolant, continue périphériquement et en relation de continuité avec les plaques 50 et 51, en prenant soin de choisir le matériau constitutif de cette enveloppe périphérique 52 de telle sorte qu'elle présente une compressibilité, parallèlement au sens 2, au moins égale à celle du distributeur 27, c'est-à-dire une rigidité au plus égale à celle de celui-ci à l'encontre d'une compression parallèlement au sens 2.

Naturellement, cette référence au distributeur 27 en ce qui concerne l'éventuelle compressibilité de l'enveloppe périphérique 52 doit s'entendre dans le contexte général de la présente demande, dans lequel il est bien entendu que le distributeur 27, de même que la matrice 6, le sommier 38, l'ensemble rigide de calage 45 et les plaques 41 et 42, est rigide dans des conditions normales d'injection, c'est-à-dire résiste au fléchissement au moins lorsqu'il est intégré à l'ensemble compact constitué par la superposition indiquée et résiste en outre aux efforts de compression auxquels il peut être soumis pendant l'injection de la matière thermoplastique à l'état liquide dans les empreintes 14 ou cavités 48. A cet égard, ces composants communs à un dispositif selon l'invention et à un dispositif de l'art antérieur peuvent être réalisés dans les mêmes matériaux que dans l'art antérieur, à savoir par exemple en acier. Les plaques 41 et 42 peuvent quant à elles être constituées d'un tissu de fibres de verre, en couches superposées et liées entre elles par enrobage dans une résine thermodurcissable, une telle constitution n'étant cependant indiquée qu'à titre d'exemple non limitatif.

Un Homme du métier comprendra aisément que le mode de réalisation d'un dispositif d'injection selon l'invention qui vient d'être décrit ne constitue qu'un exemple non limitatif par rapport auquel on pourra pas prévoir de nombreuses variantes sans sortir pour autant du cadre de la présente invention, en particulier en termes de nombre d'empreintes telles que 4, de nombre de buses telles que 17, associé à chaque empreinte telle que 4, de conception générale des buses 17, du distributeur 27 et de son conduit d'alimentation 33, et en termes de choix et de disposition relative des composants respectifs de la matrice 1, du sommier 38 et de l'ensemble rigide de calage 45.

## Revendications

1. Dispositif d'injection d'une matière thermoplastique à l'état liquide dans une empreinte de moulage (4), comportant, en référence à un sens déterminé (2) d'injection :
- une matrice rigide (1), présentant une face avant (3) délimitant partiellement l'empreinte (4) de moulage, une face arrière (9) sensiblement plane et sensiblement perpendiculaire au sens d'injection (2), et au moins un exemplaire d'un passage (19, 20) traversant la matrice (1) de sa face arrière (9) à sa face avant (3), dans le sens d'injection (2),
- autant d'exemplaires d'une buse d'injection que d'exemplaires du passage traversant (19, 20), chaque exemplaire de la buse d'injection (17) étant disposé à l'intérieur d'un exemplaire respectif du passage traversant (19, 20) et en appui vers l'avant sur la face arrière (9) de la matrice (1), en formant une saillie vers l'arrière sur la face arrière (9) de la matrice (1),
- un distributeur (27) plat, rigide, présentant une face avant (26) sensiblement plane, sensiblement parallèle à la face arrière (9) de la matrice (1) et en appui vers l'avant sur chaque exemplaire de la buse d'injection (17) et, le cas échéant, sur la face arrière (9) de la matrice (1) par l'intermédiaire de moyens localisés (29) de positionnement relatif, de façon à définir autour de chaque exemplaire de la buse d'injection (17) et, le cas échéant, des moyens localisés (29) de positionnement relatif, entre la face avant (26) du distributeur et la face arrière (9) de la matrice (1), un espace avant (41) sensiblement continu, plat, le distributeur (27) présentant en outre une face arrière (34) sensiblement plane, sensiblement parallèle à sa face avant (26), et un chant périphérique (35) raccordant mutuellement ses faces avant et arrière (34),
- un conduit (33) d'alimentation du distributeur (27) en matière thermoplastique à l'état liquide, formant une saillie vers l'arrière sur la face arrière (34) du distributeur, et, le cas échéant, des moyens commandés d'obturation de chaque exemplaire de la buse d'injection (17), formant une saillie vers l'arrière sur la face arrière (34) du distributeur (27),
- un sommier (36) plat, rigide, présentant une face avant (37) sensiblement plane, sensiblement parallèle à la face arrière (34) du distributeur (27) et en appui vers l'avant sur la face arrière (34) du distributeur (27) par l'intermédiaire de moyens d'entretoisement (51) de façon à définir autour du conduit d'alimentation (33) et, le cas échéant, des moyens d'obturation, entre la face avant (37) du sommier (36) et la face arrière (34) du distributeur (27), un espace arrière (42) sensiblement continu, plat, le sommier (36) et les moyens d'entretoisement (51) étant agencés pour autoriser un libre passage, vers l'arrière, du conduit d'alimentation (33) et, le cas échéant, des moyens d'obturation,
- des moyens rigides (45, 50, 51) d'appui périphérique, vers l'avant, d'une zone périphérique de la face avant (37) du sommier (36) sur une zone périphérique de la face arrière (9) de la matrice (1), autour du chant périphérique (35) du distributeur (27), définissant avec le chant périphérique (35) du distributeur un espace périphérique (44) continu, communiquant avec les espaces avant (41) et arrière (42), et
- des tirants (16) d'assemblage mutuel de la matrice (1) et du sommier par l'intermédiaire desdits moyens d'appui périphérique (45, 50, 51), sensiblement parallèles au sens d'injection et répartis autour dudit espace périphérique (44),
- une plaque avant (50) d'un matériau thermiquement isolant, en appui à plat, de façon aussi continue que possible, contre une surface aussi grande que possible de la face arrière (9) de la matrice (1) et de la face avant (26) du distributeur (27), autour de chaque exemplaire de la buse d'injection (17) et, le cas échéant, des moyens localisés (29) de positionnement relatif, pour combler au maximum ledit espace avant (41), ladite plaque avant (50) étant sensiblement incompressible parallèlement au sens d'injection dans des conditions normales d'injection,
**caractérisé en ce que** lesdits moyens d'appui périphérique (45, 50, 51) comportent un ensemble rigide (45) de calage présentant une face avant (47) coplanaire de la face avant (26) du distributeur (27) et une partie périphérique de la plaque avant (50), en appui à plat, de façon aussi continue que possible, autour des tirants (16), vers l'avant contre une surface aussi grande que possible de la zone périphérique de la face arrière (9) de la matrice (1) et vers l'arrière contre la face avant (47) de l'ensemble de calage (45).

2. Dispositif d'injection selon la revendication 1, **caractérisé en ce que** les moyens d'entretoisement (51) sont constitués par une plaque arrière (51) d'un matériau thermiquement isolant, en appui à plat, de façon aussi continue que possible, contre une surface aussi grande que possible de la face arrière (34) du distributeur (27) et de la face avant (37) du sommier (36), autour du conduit d'alimentation (33) et, le cas échéant, des moyens d'obturation, pour combler au maximum ledit espace arrière (42), **en ce que** la plaque arrière (51) est sensiblement incompressible parallèlement au sens d'injection dans des conditions normales d'injection, et **en ce que** lesdits moyens d'appui périphérique (45, 50, 51) comportent un ensemble rigide de calage (45) présentant une face arrière (46) coplanaire de la face arrière (34) du distributeur (27) et une partie périphérique de la plaque arrière (51), en appui à plat, de façon aussi continue que possible, autour des tirants (16), vers l'arrière contre une surface aussi grande que possible de la zone périphérique de la face avant (37) du sommier (36) et vers l'avant contre la face arrière (46) de l'ensemble de calage (45).

3. Dispositif d'injection selon la revendication 2, **caractérisé en ce** en ce qu'il comporte une enveloppe périphérique (52) en matériau thermiquement isolant, comblant ledit espace périphérique continu (44), placée en relation de continuité avec les plaques avant (50) et arrière (51), et présentant parallèlement au sens d'injection (2) une rigidité au plus égale à celle du distributeur (27) et des moyens d'appui (45, 50, 51).

## Claims

1. Device for injecting thermoplastic material in a liquid state into a mould cavity (4), comprising, in reference to a determined direction (2) of injection:
- a stiff matrix (1), having a front surface (3) partially defining the mould cavity (4), a substantially flat rear surface (9) substantially perpendicular to the direction of injection (2), and at least one passage (19, 20) going through the matrix (1) from its rear surface (9) to its front surface (3), in the direction of injection (2),
- as many injection nozzles as through passages (19, 20), each injection nozzle (17) being disposed inside a respective through passage (19, 20) and bearing frontward on the rear surface (9) of the matrix (1), forming a rearward projection on the rear surface (9) of the matrix (1),
- a flat, stiff distributor (27) having a substantially flat front surface (26) substantially parallel to the rear surface (9) of the matrix (1) and bearing frontward on each injection nozzle (17) and, if applicable, on the rear surface (9) of the matrix (1) with the aid of localized means (29) for relative positioning, in such a way as to define, around each injection nozzle (17) and, if applicable, around localized means (29) for relative positioning, between the front surface (26) of the distributor and the rear surface (9) of the matrix (1), a flat, substantially continuous front space (41), the distributor (27) moreover has a substantially flat rear surface (34), substantially parallel to its front surface (26), and a peripheral edge (35) connecting its front and rear surfaces (34) to each other,
- a supply conduit (33) of the distributor (27) of thermoplastic material in a liquid state, forming a rearward projection on the rear surface (34) of the distributor, and, if applicable, controlled gating means of each injection nozzle (17), forming a rearward projection on the rear surface (34) of the distributor (27),
- a flat, stiff bolster plate (36) having a substantially flat front surface (37) substantially parallel to the rear surface (34) of the distributor (27) and bearing frontward on the rear surface (34) of the distributor (27) with the aid of bracing means (51) so as to define, around the supply conduit (33) and, if applicable, around gating means, between the front surface (37) of the bolster plate (36) and the rear surface (34) of the distributor (27), a flat, substantially continuous rear space (42), the bolster plate (36) and the bracing means (51) being arranged to allow free rearward passage of the supply conduit (33) and, if applicable, of gating means,
- stiff means (45, 50, 51) for frontward peripheral bearing of a peripheral area of the front surface (37) of the bolster plate (36) on a peripheral area of the rear surface (9) of the matrix (1), around the peripheral edge (35) of the distributor (27), defining, with the peripheral edge (35) of the distributor, a continuous peripheral space (44) communication with the front (41) and rear (42) spaces, and
- rods (16) for mutual assembly of the matrix (1) and bolster plate with the aid of said peripheral bearing means (45, 50, 51), substantially parallel to the direction of injection and distributed around said peripheral space (44),
- a front plate (50) of a thermally insulating material, resting flat in a manner that is as continuous as possible, against a surface (that is as large as possible) of the rear surface (9) of the matrix (1) and of the front surface (26) of the distributor (27), around each injection nozzle (17) and, if applicable, around localized means (29) for relative positioning, to fill said front space (41) as much as possible, said front plate (50) being substantially incompressible parallel to the direction of injection under normal injection conditions,
**characterized in that** said peripheral bearing means (45, 50, 51) comprise a stiff clamp assembly (45) having a front surface (47) coplanar with the front surface (26) of the distributor (27) and a peripheral part of the front plate (50), resting flat, in a manner that is as continuous as possible, around rods (16), toward the front against a surface (that is as large as possible) of the peripheral area of the rear surface (9) of the matrix (1) and toward the rear against the front surface (47) of the clamp assembly (45).

2. Injection device according to claim 1, **characterized in that** the bracing means (51) are made up of a rear plate (51) of a thermally insulating material, resting flat in a manner that is as continuous as possible, against a surface (that is as large as possible) of the rear surface (34) of the distributor (27) and the front surface (37) of the bolster plate (36), around the supply conduit (33) and, if applicable, around gating means, to fill said rear space (42) as much as possible, **in that** the rear plate (51) is substantially incompressible parallel to the direction of injection under normal injection conditions, and **in that** said peripheral bearing means (45, 50, 51) comprise a stiff clamp assembly (45) having a rear surface (46) coplanar with the rear surface (34) of the distributor (27) and a peripheral part of the rear plate (51), resting flat, in a manner that is as continuous as possible, around rods (16), toward the rear against a surface (that is as large as possible) of the peripheral area of the front surface (37) of the bolster plate (36) and toward the front against the rear surface (46) of the clamp assembly (45).

3. Injection device according to claim 2, **characterized in that** it comprises a peripheral envelope (52) of a thermally insulating material, filling said continuous peripheral space (44), placed in continuous relation with the front (50) and rear (51) plates, and having, parallel to the direction of injection (2), a stiffness at most equal to that of the distributor (27) and bearing means (45, 50, 51).

## Patentansprüche

1. Vorrichtung zur Einspritzung eines thermoplastischen Materials im flüssigen Zustand in eine Gußform (4) umfassend in Bezug auf eine Richtung (2), die durch die Einspritzung bestimmt ist:
- eine feste Matrize (1), die eine vordere Fläche (3) aufweist, die die Gußform (4) teilweise beschränkt, eine hintere Fläche (9), die etwa flach und etwa senkrecht zur Richtung der Einspritzung (2) ist, und mindestens eine Ausführung eines Durchlasses (19, 20), der durch die Matrize (1) von ihrer hinteren Fläche (9) zu ihrer vorderen Fläche (3) in Richtung der Einspritzung (2) hindurch führt,
- so viele Ausführungen einer Einspritzdüse wie Ausführungen von hindurch führenden Durchlässen (19, 20), wobei jede Ausführung der Einspritzdüse (17) innerhalb einer jeweiligen Ausführung eines hindurch führenden Durchlasses (19, 20) und als Auflage nach vorn auf die hintere Fläche (9) der Matrize (1) angeordnet ist, wobei sie einen Vorsprung nach hinten auf die hintere Fläche (9) der Matrize (1) bildet,
- einen flachen festen Verteiler (27), der eine vordere Fläche (26), die etwa flach, etwa parallel zur hinteren Fläche (9) der Matrize (1) ist, und als Auflage nach vorne auf jede Ausführung der Einspritzdüse (17) und gegebenenfalls auf die hintere Fläche (9) der Matrize (1) mittels lokalisierter Mittel (29) zur relativen Positionierung, so daß um jede Ausführung der Einspritzdüse (17) und gegebenenfalls der lokalisierten Mittel (29) zur relativen Positionierung zwischen der vorderen Fläche (26) des Verteilers und der hinteren. Fläche (9) der Matrize (1) ein vorderer Raum (41) definiert wird, der etwa durchgehend, flach ist, wobei der Verteiler (27) unter anderem eine hintere Fläche (34), die etwa eben, etwa parallel zu seiner vorderen Fläche (26) ist, und eine umlaufende Kante (35) aufweist, die gegenseitig seine vordere und hintere (34) Fläche verbindet,
- eine Versorgungsleitung (33) des Verteilers (27) mit thermoplastischem Material in flüssigem Zustand, die eine Auskragung nach hinten auf der hinteren Fläche (34) des Verteilers bildet und gegebenenfalls gesteuerte Dichtungsmittel jeder Ausführung der Einspritzdüse (17), die eine Auskragung nach hinten auf der hinteren Fläche (34) des Verteilers (27) bilden,
- ein flacher, fester Rahmen (36), der eine vordere Fläche (37) aufweist, die etwa eben, etwa parallel zur hinteren Fläche (34) des Verteilers (27) ist, und als Auflage nach vorne auf die hintere Fläche (34) des Verteilers (27) mittels Versteifungsmitteln (51), so daß um die Versorgungsleitung (33) und gegebenenfalls um Dichtungsmittel zwischen der vorderen Fläche (37) des Rahmens (36) und der hinteren Fläche (34) des Verteilers (27) ein hinterer Raum (42) definiert wird, der etwa durchgehend, flach ist, wobei der Rahmen (36) und die Dichtungsmittel (51) angeordnet sind, um der Versorgungsleitung (33) und gegebenenfalls den Dichtungsmitteln einen freien Durchlaß nach hinten zu gestatten,
- feste Mittel (45, 50, 51) zur äußeren Auflage nach vorne eines äußeren Bereichs der vorderen Fläche (37) des Rahmens (36) auf einen äußeren Bereich der hinteren Fläche (9) der Matrize (1), um die äußere Kante (35) des Verteilers (27) herum, wobei mit der äußeren Kante (35) des Verteilers ein äußerer Raum (44) definiert wird, der durchgehend ist, der in Verbindung steht mit dem vorderen Raum (41) und dem hinteren Raum (42), und
- Verbindungselemente (16) zur gegenseitigen Anordnung der Matrize (1) und des Rahmens mittels der äußeren Stützmittel (45, 50, 51), die etwa parallel zur Einspritzrichtung sind und um den äußeren Raum (44) verteilt sind,
- eine vordere Platte (50) aus thermisch isolierendem Material, als Auflage, so durchgehend wie möglich, gegen eine so große Oberfläche wie möglich der hinteren Fläche (9) der Matrize (1) und der vorderen Fläche (26) des Verteilers (27), um jede Ausführung der Einspritzdüse (17) und gegebenenfalls um die lokalisierten Mittel (29) zur relativen Positionierung herum, um den vorderen Raum (41) bis zum Maximum auszufüllen, wobei die vordere Platte (50) etwa inkompressibel parallel zur Einspritzrichtung unter normalen Einspritzbedingungen ist,
**dadurch gekennzeichnet, daß** die äußeren Auflagemittel (45, 50, 51) eine feste Klemmanordnung (45), die eine vordere Fläche (47) aufweist, die koplanar zur vorderen Fläche (26) des Verteilers (27) ist, und einen äußeren Teil der vorderen Platte (50) als flache Auflage umfassen, so durchgehend wie möglich, um die Zugelemente (16) herum nach vorne gegen eine so große Oberfläche wie möglich des äußeren Bereichs der hinteren Fläche (9) der Matrize (1) und nach hinten gegen die vordere Fläche (47) der Klemmanordnung (45).

2. Einspritzvorrichtung nach Anspruch 1, **dadurch gekennzeichnet, daß** die Versteifungsmittel (51) durch eine hintere Platte (51) aus einem thermisch isolierenden Material als flache Auflage aufgebaut sind, so durchgehend wie möglich gegen eine so große Oberfläche wie möglich der hinteren Fläche (34) des Verteilers (27) und der vorderen Fläche (37) des Rahmens (36), um die Versorgungsleitung (33) und gegebenenfalls die Dichtungsmittel herum, um den hinteren Raum (42) bis zum Maximum auszufüllen, wobei die hintere Platte (51) etwa inkompressibel parallel zur Einspritzrichtung unter normalen Einspritzbedingungen ist und wobei die äußeren Auflagemittel (45, 50, 51) eine feste Klemmanordnung (45) umfassen, die eine hintere Fläche (46), die koplanar zur hinteren Fläche (34) des Verteilers (27) ist, und einen äußeren Teil der hinteren Platte (51) als flache Auflage aufweist, so durchgehend wie möglich, um die Zugelemente (16) herum nach hinten gegen eine so große Oberfläche wie möglich des äußeren Bereichs der vorderen Fläche (37) des Rahmens (36) und nach vorne gegen die hintere Fläche (46) der Klemmanordnung (45).

3. Einspritzvorrichtung nach Anspruch 2, **dadurch gekennzeichnet, daß** sie eine äußere Hülle (52) aus thermisch isolierendem Material umfaßt, welche den äußeren durchgehenden Raum (44) füllt, durchgehend mit der vorderen Platte (50) und der hinteren Platte (51) angeordnet, und die parallel zur Einspritzrichtung (2) eine Festigkeit höchstens gleich zu der des Verteilers (27) und der Auflagemittel (45, 50, 51) aufweist.
